# EUROPÄISCHE PATENTSCHRIFT

(11) **EP 0 591 299 B1**
(45) Veröffentlichungstag und Bekanntmachung des Hinweises auf die Patenterteilung: **29.03.1995**
(21) Anmeldenummer: 92912777.7
(22) Anmeldetag: 24.06.1992
(51) Int. Cl.: F26B 7/00, F26B 3/12, F26B 17/24

(54) **VERFAHREN UND VORRICHTUNG ZUM ENTWÄSSERN VON SCHLÄMMEN**
PROCESS AND DEVICE FOR SLUDGE DEWATERING
PROCEDE ET DISPOSITIF DE DESHYDRATATION DE BOUES DE CURAGE

(30) Priorität: 25.06.1991 DE 4120959
(43) Veröffentlichungstag der Anmeldung: 13.04.1994
(73) Patentinhaber: BAUMANN-SCHILP, Lucia, D-82237 Wörthsee (DE)
(72) Erfinder: RUMOCKI, Andrzej, 95-070 Aleksandrow/Lodz (PL)
(74) Vertreter: Konle, Tilmar, Dipl.-Ing.
(86) Internationale Anmeldenummer: EP9201426
(87) Internationale Veröffentlichungsnummer: WO9300562

(56) Entgegenhaltungen:
- AT-B- 305 212
- CH-A- 148 212
- CH-A- 655 786
- DE-A- 1 432 864
- DE-C- 668 849
- DE-C- 3 630 920
- DE-C- 3 915 082
- GB-A- 134 966
- US-A- 3 724 091

## Beschreibung

Die Erfindung bezieht sich auf ein Verfahren und eine Vorrichtung zum Entwässern von Schlämmen, insbesondere aus Kläranlagen, gemäß dem Oberbegriff der Patentansprüche 1, bzw. 16. Verfahren und Vorrichtungen dieser Art sind aus der DE-OS 14 32 864 bekannt.

Bei bekannten Verfahren zum Entwässern von Klärschlamm wird der Schlamm mittels einer Vollmantel-Schneckenzentrifuge, einer Kammerfilterpresse oder einer Siebbandpresse mechanisch auf etwa 25 bis 35 Gewichts-% Trockensubstanzgehalt entwässert. Um den daraus resultierenden, feuchten und klebrigen, zu Klumpen zusammengebackenen Dickstoff in einem Trockner beispielsweise auf 90 Gewichts-% Trockensubstanzgehalt trocknen zu können, werden gemäß DE 39 15 082 C1 die Dickstoffklumpen vorzerkleinert, mit sehr viel Trockenstaub rückgemischt und granuliert, um die sogenannte Leimphase im Dickstoff zu überwinden und den Trockensubstanzgehalt auf etwa 60 Gewichts-% zu erhöhen. Nach Absieben der Grobklumpen wird der resultierende Feststoff mehrfach zwischengelagert und einem Kontakttrockner oder Konvektionstrockner in dosierten Mengen zugeführt. Diese Verfahrensweise hat neben dem enorm vermehrten apparativen Aufwand zur Folge, daß die der Zentrifuge nachgeschaltete Trocknungsanlage eine gegenüber der zentrifugierten Dickstoffmenge nahezu verdreifachte bis verfünffachte Materialmenge verarbeiten muß, was eine entsprechende Vergrößerung der Baugröße der Trocknungsanlage zur Folge hat. Nachteilig ist ferner, daß durch die Vergrößerung der Materialmenge die gesamte, abzutrennende Feuchtigkeitsmenge bei einem sehr viel niedrigeren Feuchtigkeitsniveau und dadurch mit stark verringerter Trocknungsgeschwindigkeit entfernt werden muß.

Aus der DE-PS 948 497 ist es zum Nachtrocknen des in einer kontinuierlich arbeitenden Sieb-Zentrifuge, beispielsweise einer Schub-Sieb-Zentrifuge, Schnecken-Sieb-Zentrifuge oder Vollmantelzentrifuge, entwässerten, noch feuchten Schleudergutfeststoffes bekannt, eine heißgas-oder heißdampfbetriebene Trocknungsvorrichtung zu verwenden, welche mit der Zentrifuge eine bauliche Einheit bildet. Im Falle einer Schubzentrifuge besteht die Trocknungsvorrichtung aus einem Mantel, welcher zwischen dem Austragsende der Zentrifugentrommel und dem Auffangraum für die Feststoffe angeordnet ist. Der Mantel weist an seinem Anschlußende an die Zentrifugentrommel einen etwa dem Außendurchmesser dieser Trommel entsprechenden Innendurchmesser auf und erweitert sich kegelförmig zum Anschlußende an den Auffangraum für die Feststoffe. An seinem Umfang ist der Mantel mit einer Vielzahl gleichmäßig verteilter, spiralförmig angeordneter und zur Mantelachse paralleler Öffnungen versehen, durch welche Heißluft oder Heißdampf über einen Verteiler in den Innenraum des Mantels eingeströmt wird. Der Verteiler wird von einem Ringraum zwischen dem kegelförmigen Mantel und einem den Mantel umgebenden, zylindrischen Gehäuse gebildet. Die eingeströmte Heißluft bzw. der Heißdampf fördert die aus dem Schleuderraum der Schubzentrifuge ausgestoßenen Feststoffe durch das Innere des Mantels und trocknet sie dabei. In ähnlicher Weise arbeitet auch die Vorrichtung nach der DE-PS 36 30 920, bei welcher zusätzlich zur Luftführung innerhalb der Trocknungsvorrichtung verstellbare Leitbleche vorgesehen sind.

Die bekannte Trocknungsvorrichtung ist jedoch nur für körnige, granulatartige Feststoffe vorgesehen, welche nach dem Zentrifugieren nur noch eine geringe Restfeuchtigkeit von etwa 10 bis 15 Gewichts-% aufweisen. Für Dickstoffe aus Schlammzentrifugen mit einem Wasseranteil von 60 bis 85 Gewichts-% ist die bekannte Trocknungsvorrichtung weder vorgesehen noch geeignet. Zudem ist der Durchmesser der zu entwässernden Partikeln bei der bekannten Trocknungsvorrichtung vorgegeben und nicht von Vorrichtungsparametern abhängig. Demgegenüber sind die in Schlammzentrifugen erzeugten Dickstoffpartikeln in ihrer Größe ganz wesentlich von Vorrichtungsparametern abhängig, nämlich von der Drehzahl der Zentrifuge, dem Außendurchmesser der Abwurfzone, der Anzahl und der Öffnungsweite der Abwurföffnungen sowie von dem erzielten Entwässerungsgrad. Hinzukommt, daß die Dickstoffpartikeln aus Schlammzentrifugen im Gegensatz zu körnigen Materialien zur Verklumpung neigen, da der Feuchtigkeitsgehalt mit 60 - 85 Gew.-% entsprechend hoch ist. Schließlich strömt bei den bekannten Trocknungsvorrichtungen das Trocknungsgas im wesentlichen entlang der Innenwand des Mantels und würde daher die von der Zentrifuge abgeworfenen, nassen Dickstoffpartikel erst kurz vor deren Aufprall auf die Trommelinnenwand erfassen, was für einen nennenswerten Feuchtigkeitsentzug der nassen Dickstoffpartikel unzureichend wäre.

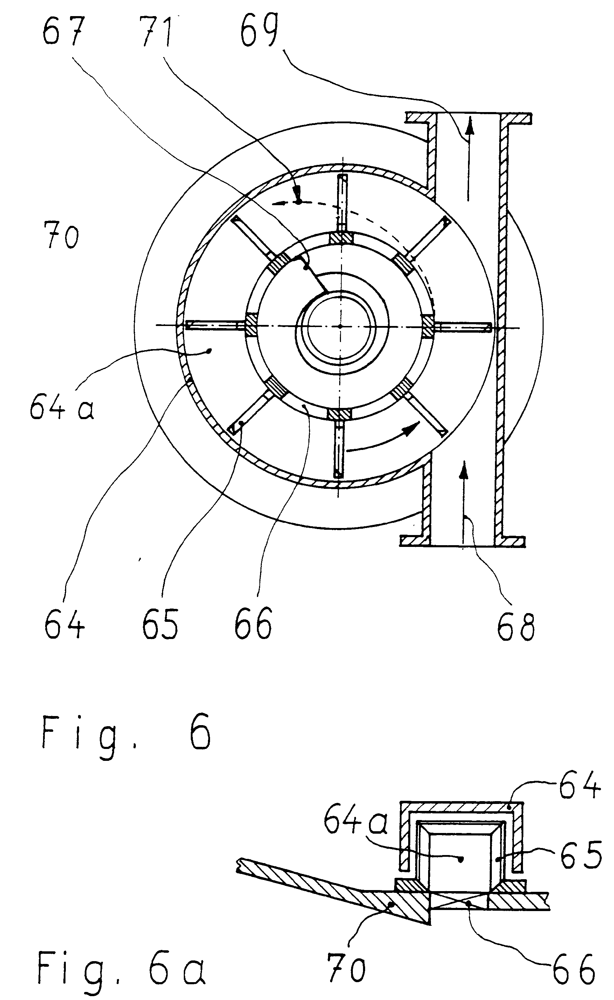

Es ist ferner aus der DE-OS 14 32 864 bekannt, zum Nachtrocknen von zentrifugierten, pastösen Feststoff-Flüssigkeitsgemischen die vom Rotor einer Vollmantel-Zentrifuge abgeschleuderten Dickstoffpartikeln mit einem Trocknungsgas zu beaufschlagen. Dabei erfolgt die Trocknung nur innerhalb eines käfigförmigen, mitrotierenden Zerteilungskörpers, welcher auf dem Rotor der Zentrifuge radial zu beiden Seiten der Abwurföffnungen angebracht ist und in welchen das Trocknungsgas in der Nähe der Abwurföffnungen tangential eingeleitet wird. Durch seitlich, geschlossene Begrenzungsringe des käfigförmigen Zerteilungskörpers wird sichergestellt, daß das eingetrömte Trocknungsgas und die Partikeln nicht in Achsrichtung des Zentrifugengehäuses abgelenkt werden. Dadurch ist jedoch die Flugbahn der Dickstoffpartikeln vom Austritt aus dem Rotor zum gehäusemantel sehr gering, wodurch eine ausreichende Trocknungswirkung nur für bestimmte, grobkörnige Feststoff-Flüssigkeitsgemische, wie beispielsweise Natriumbisulfid-C9-Aldehyd-Addukt, erzielt wird. Für die Nachtrocknung von zentrifugiertem Klärschlamm ist die bekannte Vorrichtung weder vorgesehen noch aufgrund ihrer kurzen Trocknungsstrecke zwischen Abwurföffnungen und Zentrifugenmantel geeignet. Wie sich experimentell bei einer ähnlichen, in Fig. 6 und 6a dargestellten Vorrichtung gezeigt hat, lagern sich die stark klebrigen Klärschlammpartikeln bei unzureichender Trocknung sehr rasch innerhalb des mitrotierenden Käfigs an und verstopfen die Trocknungsvorrichtung vollständig. Aus diesem Grund hat die Vorrichtung nach der DE-OS 14 32 864 bei der Entwicklung von Klärschlamm-Trocknungsanlagen, wie sie anhand der DE 39 15 082 C1 dokumentiert ist, keine Berücksichtigung gefunden.

Die Aufgabe der Erfindung besteht darin, den Aufwand zur Entwässerung von Klärschlamm erheblich zu verringern und dabei den Schritt vom klebrigen, feuchten Dickstoff zum rieselfähigen Feststoff-Granulat praktisch ohne Materialrückmischung durchzuführen.

Die Aufgabe wird erfindungsgemäß durch die kennzeichnenden Merkmale der Patentansprüche 1, bzw. 16 gelöst.

Vorteilhafte Ausgestaltungen des erfindungsgemäßen Verfahrens und der erfindungsgemäßen Vorrichtung ergeben sich aus den Unteransprüchen.

Um den oberflächenfeuchten Dickstoff aus der erfindungsgemäß verwendeten Vollmantel-Zentrifuge möglichst rasch in einen nicht-klebrigen, gut rieselfähigen Feststoff durch Trocknung mit sehr hoher Trockungsgeschwindigkeit zu überführen, muß der klebrige Dickstoff in kleinste Partikel mit sehr hoher spezifischer Oberfläche zerteilt und mit hoher Relativgeschindigkeit einem Trocknungsgas (Heißgas oder Heißdampf) ausgesetzt werden. Dies gelingt erfindungsgemäß dadurch, daß die mit hoher Geschwindigkeit am Auswurf der Vollmantel-Zentrifuge abgespritzten Dickstoffpartikel mit einem durchschnittlichen Durchmesser im Bereich von 0,1 bis 1 mm axial abgelenkt und auf einer spiralförmigen Flugbahn mit hoher Geschwindigkeit von dem Trocknungsgas umspült werden und oberflächlich Feuchtigkeit abgeben, bevor sie auf die Wände der Zentrifuge bzw. eines die Zentrifuge umgebenden oder in deren axialer oder radialer Verlängerung angeordneten Gehäuses aufprallen.

Die Schlamm-Partikelgröße am Dickstoff-Auswurf einer Vollmantel-Zentrifuge ist in erster Linie abhängig von der Umfangsgeschwindigkeit der Zentrifugentrommel und von der Relativgeschwindigkeit zur Trocknungsgasströmung. Der mittlere Durchmesser der Dickstoffpartikel wird umso kleiner, je größer beide Einflußparameter sind. Wie Untersuchungen gezeigt haben, spritzen Vollmantel-Schneckenzentrifugen den entwässerten Dickstoff mit einer Umfangsgeschwindigkeit von etwa 60 bis 80 m/s ab. Bei Vollmantel-Düsenzentrifugen beträgt die Abwurfgeschwindigkeit der entwässerten Dickstoffpartikel etwa 100 m/s. Die bei diesen Abwurfgeschwindigkeiten sich bildenden Partikelgrößen liegen mit ihrem Durchmesser bei etwa 0,5 mm. Diese feinkörnig dispergierten Dickstoffpartikel werden durch Zufuhr von Trocknungsgas nahe der Abwurfstelle bei gleichzeitiger Ablenkung in axialer Richtung nachentwässert, wodurch sich eine sehr leistungsfähige Zerstäubungstrocknung mit hoher, volumenbezogener spezifischer Wasserdampfleistung ohne zusätzliche Zerstäubervorrichtung erzielen läßt.

Die mit der Erfindung erzielbaren Vorteile bestehen insbesondere darin, daß anstelle einer Vielzahl von Apparaten und Transportgeräten für die Klärschlammtrocknung ein einzelner, kompakt gebauter Zentrifugen-Zerstäubungstrockner mit sehr hoher spezifischer Trennleistung vorliegt, welcher die schwierigen Trocknungsabschnitte der Leimphase ohne Rückmischung zusätzlicher Stoffe überwindet. Ein gegebenenfalls nachfolgender Endtrockner wird dadurch in der Feuchtigkeitsverdampfung stark entlastet. Weiter ist von Vorteil, daß bereits bestehende Klärschlammzentrifugen in der Bauweise von Vollmantel-Zentrifugen in erfindungsgemäßer Weise nachgerüstet werden können.

Die Erfindung nutzt erstmalig für die Klärschlammtrocknung die vorteilhaften Dispergiereigenschaften einer Vollmantelzentrifuge (worunter eine Vollmantel-Schneckenzentrifuge, eine Vollmantel-Düsenzentrifuge oder eine Vollmantel-Zentrifuge verstanden wird) als Zerstäubermaschine, so daß erfindungsgemäß einer Klärschlammzentrifuge anstelle der bisherigen, alleinigen Trennfunktion nunmehr zwei Hauptfunktionen zugeordnet werden: Zum einen die mechanische Abtrennung von Klärschlamm-Dickstoff aus der Suspension, und zum anderen die Dispergierung und Zerstäubung des abgetrennten Klärschlamm-Dickstoffes in kleinste Partikel und deren Verteilung und Trocknung durch einen Trocknungsgasstrom. Diese zweite Funktion, nämlich die vorteilhafte Nutzung der Fein-Dispergiereigenschaften des Dickstoffabwurfes einer Klärschlammzentrifuge in der Bauweise einer Vollmantel-Zentrifuge, wurde bisher zu Zwecken der Klärschlamm-Zerstäubungstrocknung technisch nicht genutzt.

Die Erfindung wird mit ihren weiteren Einzelheiten und Vorteilen anhand der Zeichnungen näher erläutert.

Es zeigt:
- Fig. 1: eine schematische Übersicht über eine im offenen Kreislauf betriebene Entwässerungs- und Trocknungsanlage mit einer erfindungsgemäß ausgebildeten Entwässerungsvorrichtung, bestehend aus einer Vollmantel-Schneckenzentrifuge und einem die Zentrifuge umgebenden Trocknungsgehäuse;
- Fig. 2: eine schematische Übersicht über eine im Umluftbetrieb gefahrene Entwässerungs- und Trocknungsanlage mit einer erfindungsgemäß ausgebildeten Entwässerungsvorrichtung und einem nachge-schalteten Langzeit-Kontakttrockner;
- Fig. 3: eine schematische Übersicht über eine im geschlossenen Brüden-Kreislauf betriebene Entwässerungs- und Trocknungsanlage mit einer erfindungsgemäß ausgebildeten Entwässerungsvorrichtung und einem nachgeschalteten Wirbelschichttrockner;
- Fig. 4: eine schematische Übersicht über eine weitere Entwässerungs- und Trocknungsanlage mit einer erfindungsgemäß ausgebildeten Entwässerungsvorrichtung, einem nachgeschalteten Kontakttrockner mit Feinststaubrückmischung und einer Abluft-Brüdenwäsche im Zentrat-Abwurf der Entwässerungsvorrichtung;
- Fig. 5: einen schematischen Längsschnitt durch ein Ausführungsbeispiel einer erfindungsgemäß ausgebildeten Entwässerungsvorrichtung, bestehend aus einer Vollmantel-Schneckenzentrifuge, einem als Zerstäuberrad wirkenden Dickstoff-Abwurf, einem die Zentrifuge umgebenden Gehäuse mit beheizten Wänden, einem weiteren Einlaß für feinstaubbeladenes Sekundärgas zum Granulieren, einem Mahltrocknungsorgan, einem Flugstromtrockner und einem Abscheidezyklon;
- Fig. 6: einen Querschnitt und Fig. 6a einen Teil-Längsschnitt durch eine für die Trocknung von zentrifugiertem Klärschlamm ungeignete Entwässerungsvorrichtung im Bereich der Dickstoff-Abwurfzone;
- Fig. 7: eine schematische Ansicht eines Ausführungsbeispiels einer erfindungsgemäßen Entwässerungsvorrichtung mit fliegender Lagerung bei vertikaler Achslage, in deren Trocknungsraum ein Abscheidezyklon integriert ist;
- Fig. 8: einen Schnitt durch die Abwurfzone einer Ausführungsbeispiels einer erfindungsgemäßen Entwässerungsvorrichtung mit speziell gestalteten Abwurföffnungen;
- Fig. 9: eine Ansicht eines weiteren Ausführungsbeispiels einer erfindungsgemäßen Entwässerungsvorrichtung mit kegelförmigen Ablenkflächen für den Feststoffschleier in unmittelbarer Nähe der Abwurföffnungen und mit Stauringen im Trocknungsraum zur Steuerung der Verweilzeit der Dickstoffpartikeln;
- Fig. 10: einen Querschnitt durch ein weiteres Ausführungsbeispiel einer erfindungsgemäßen Entwässerungsvorrichtung mit Weichen im Trocknungsraum zur Klassierung der Dickstoffpartikeln;
- Fig.11: einen Längsschnitt durch das Ausführungsbeispiel nach Fig. 10, und
- Fig. 12: einen Längsschnitt durch das austragseitige konische Ende eines weiteren Ausführungsbeispiels einer erfindungsgemäßen Entwässerungsvorrichtung mit einer Transportschnecke, deren Wendel vor der Dickstoffabwurfkante eine verringerte Steigung aufweist.

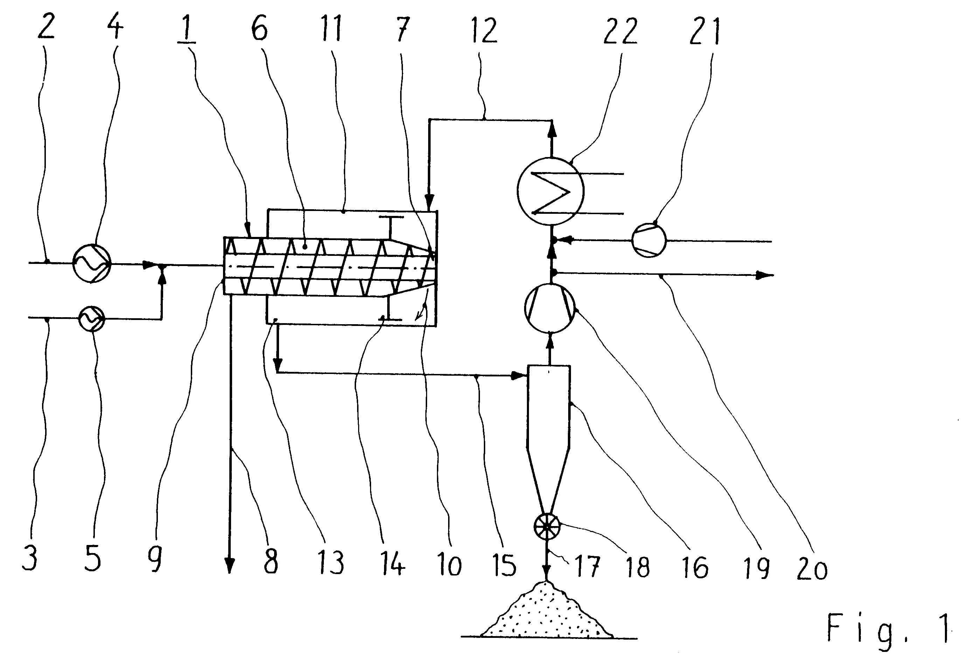

In Fig. 1 ist ein Ausführungsbeispiel einer Anlage mit einer erfindungsgemäßenEntwässerungsvorrichtung dargestellt, welche im offenen Trocknungsgaskreislauf betrieben wird. Die Entwässerungsvorrichtung weist eine Vollmantel-Schneckenzentrifuge 1 auf, welche in bekannter Weise eine drehbar gelagerte Trommel umfaßt, in welcher eine rotierende Schnecke gelagert ist. Zum austragseitigen axialen Ende hin weist die Trommel eine konusförmige Verengung auf, an deren Ende sich eine Abwurfzone 7 mit einer oder mehreren Abwurföffnungen befinden. Die Trommel wird mit geringerer Drehzahl als die Schnecke, jedoch in gleicher Drehrichtung angetrieben, wobei die geringfügige Drehzahldifferenz zwischen Trommel und Schnecke beliebig einstellbar ist und sich entsprechend der Feststoffbelastung der Zentrifuge anpaßt. Der Antrieb von Trommel und Schnecke kann elektrisch oder hydraulisch, gegebenenfalls unter Verwendung von Getriebemitteln, erfolgen. Der dargestellten Vollmantel-Schneckenzentrifuge 1 wird Klärschlamm 2 sowie ein Flockungsmittel 3 über Pumpen 4 und 5 zugeführt. Der Klärschlamm besteht beispielsweise aus 96 Gewichts-% Wasser und 4 Gewichts-% Feststoff, wobei der Feststoff durch das Flockungsmittel ( Polyelektrolyte) geflockt wird. Durch die Zentrifugalkraft setzen sich im Klärraum 6 der Zentrifuge 1 die schwebenden Feststoffteilchen des zugeführten Klärschlammes 2 an der Trommelwandung ab und werden durch die Schnecke innerhalb der Trommel zu den Abwurföffnungen der Abwurfzone 7 transportiert, wo sie von der Schnecke als Dickstoff 10 in Form von Partikeln mit einem Durchmesser im Bereich von etwa 0,1 bis etwa 1mm aus der rotierenden Trommel mit einer Geschwindigkeit von etwa 60 - 80 m/s ausgeworfen werden. Der Dickstoff 10 besteht beispielsweise aus etwa 35 Gewichts-% Feststoff und etwa 65 Gewichts-% Wasser. Das abgetrennte Zentrat 9 strömt durch Rücklaufkanäle, die am Schneckenkörper befestigt sind, oder unmittelbar im Schneckenkanal entgegengesetzt zur Austragsrichtung des Feststoffs zurück zur Eintrittsseite der Zentrifuge und wird über ein dort angebrachtes Wehr aufgestaut. Das über das Wehr übertretende Zentrat 9 fließt über eine Zentratschurre 8 aus der rotierenden Zentrifugentrommel ab. Der ausgeworfene Dickstoff 10 wird in ein die Zentrifugentrommel umgebendes, feststehendes Gehäuse 11 in feindispergierten Partikeln als Dickstoffschleier zerstäubt. In das Gehäuse 11 strömt frisches Trocknungsgas 12 mit einer Temperatur im Bereich zwischen 150 und 500 °C, beispielsweise in tangentialer Richtung, umspült den zerstäubten Dickstoffschleier und trägt ihn in Spiralbahnen im Raum zwischen dem rotierenden Trommelmantel der Zentrifuge 1 und dem Gehäuse 11 bis zum tangentialen Austritt 13 aus dem Gehäuse 11. Der dispergierte Dickstoff 10 passiert auf dem Weg zum Austritt 13 eine Mahlzone 14, in welcher Agglomerate zerkleinert werden und aufreißen. Durch den gleichzeitigen Mahl- und Trocknungsvorgang in der Zone 14 werden Anlagerungen von Dickstoffpartikeln an den Wänden des Gehäuses 11 verhindert und die Trocknungsgeschwindigkeit insbesondere der größeren dispergierten Dickstoffpartikeln stark erhöht. Beispielsweise läßt sich der Wassergehalt der Dickstoffpartikeln auf diese Weise auf etwa 35 Gewichts-% reduzieren.

Das mit vorgetrockneten Dickstoffpartikeln beladene Trocknungsgas 15 strömt in einer Leitung zum Feststoffabscheider 16, welcher als Zyklon, Faserfilter oder dergleichen ausgebildet ist, und wird dort in Gas und Feststoffhaufwerk 17 getrennt. Das abgetrennte Feststoffhaufwerk 17 besteht aus rieselfähigem Feststoff und wird über eine Zellenradschleuse 18 aus dem Abscheider 16 ausgetragen, von wo es einer Deponie, einer nachgeschalteten Trocknung, einer Verbrennung oder einer anderen Nachbehandlung zugeführt wird. Das im Feststoffabscheider 16 abgetrennte, feuchte Gas wird mittels eines Umluftgebläses 19 komprimiert. Über eine nicht näher dargestellte Weiche wird ein Teil 20 des feuchten, komprimierten Gases aus dem Gaskreislauf genommen und mit Hilfe eines Frischluftgebläses 21 durch trockene Luft ersetzt. Ein Heizregister 22 oder ein Brenner erhöht die Temperatur des Luftgemisches wieder auf die gewünschte Temperatur des heißen Trocknungsgases 12, das dem Gehäuse 11 wieder zugeführt wird.

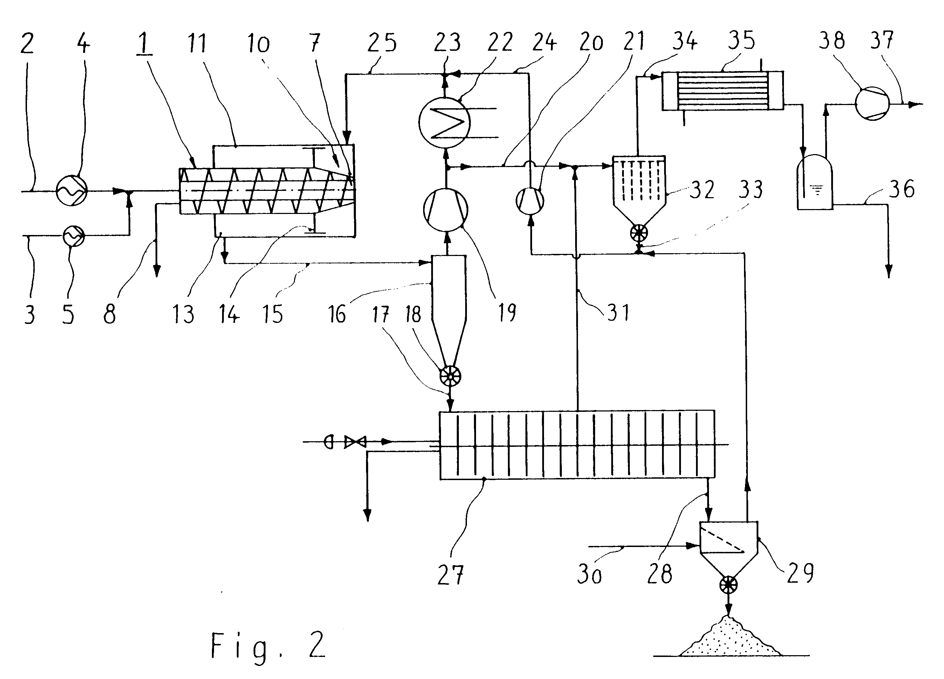

In Fig. 2 ist ein Ausführungsbeispiel für eine Anlage aus einer erfindungsgemäßen Entwässerungsvorrichtung und einem nachgeschalteten Langzeit-Kontakttrockner im Umluftbetrieb dargestellt. Die Anlagenteile 1 bis 11 sind in ihrer Funktion und in ihrem apparativen Aufbau ähnlich denen in Fig. 1. Das mit vorgetrockneten Dickstoffpartikeln beladene Trocknungsgas 15 wird im Feststoffabscheider 16 entstaubt, als feuchtes Gas im Umluftgebläse 19 komprimiert, im Heizregister 22 aufgeheizt, im Mischer 23 mit feinstaubbeladener, trockener Frischluft 24 gemischt und als staubbeladenes, heißes Trocknungsgas 25 wieder in das Gehäuse 11 mit hoher Strömungsgeschwindigkeit eingeblasen. Der Feinststaubanteil der Frischluft 24 umhüllt die dispergierten, feuchten und klebrigen Dickstoffpartikel 10 und setzt deren Neigung zur Anbackung an den Wänden des Gehäuses 11 herab, die zusätzlich durch nicht dargestellte Kratz- oder Klopfwerkzeuge gereinigt werden können. Das vom Abscheider 16 ausgetragene vorgetrocknete Feststoffhaufwerk 17 wird in den (beispielsweise als Scheibenkontakttrockner ausgeführten) Langzeit-Kontakttrockner 27 über die Zellenradschleuse 18 zudosiert und verläßt den Trockner 27 als Granulat-Staub-Gemisch 28 mit beispielsweise 95 Gewichts-% Trockensubstanzgehalt. In einem anschließenden pneumatischen Luftstrahlsieb 29 wird der Staub des Gemisches 28 von der durchgeblasenen Frischluft 30 mitgerissen. Ferner wird mit den aus dem Trockner 27 abgesaugten Brüden 31 ebenfalls Feinststaub mitgerissen. Die Brüden 31 werden zusammen mit der hinter dem Umluftgebläse 19 abgezweigten, feuchten Abluft 20 einem Schlauchfilter 32 zugeführt. Der im Schlauchfilter 32 abgefilterte Feinststaub 33 wird der staubbeladenen Frischluft am Ausgang des Luftstrahlsiebes 29 zugemischt und vom Gebläse 21 als feinstaubbeladene, trockene Frischluft 24 der in 22 aufgeheizten Umluft im Mischer 23 zugeführt. Die entstaubte, feuchte Abluft 34 am Ausgang des Schlauchfilters 32 wird im Kühler 35 durch Abkühlung kondensiert, wobei das resultierende Kondensat 36 der Kläranlage wieder zugeführt und die entfeuchtete Abluft 37 durch ein Gebläse 38 abgesaugt wird.

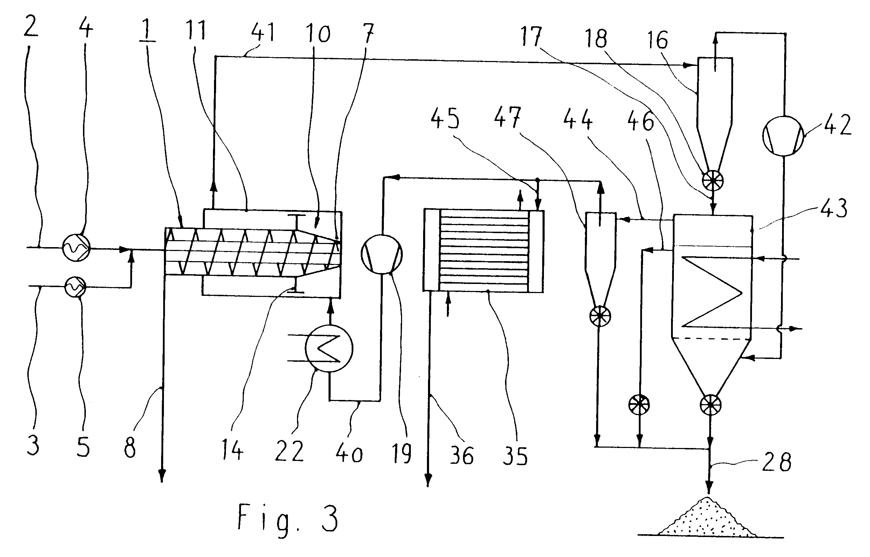

In Fig. 3 ist ein Ausführungsbeispiel für eine Anlage aus einer erfindungsgemäßen Entwässerungsvorrichtung und einem nachgeschalteten Wirbelschichttrockner 43 im geschlossenen Brüdenkreislauf dargestellt. Die Anlagenteile 1 bis 11, 22 und 35 sind ähnlich wie in Figuren 1 und 2 ausgeführt. Anstelle von heißem Trocknungsgas wird als feuchtigkeitsaufnehmendes Medium überhitzter Dampf im Kreislauf geführt. Der mit vorgetrockneten Dickstoffpartikeln beladene Dampf 41 am Ausgang des Gehäuses 11 ist noch nicht gesättigt und wird im Feststoffabscheider (Zyklon) 16 entstaubt sowie durch das Gebläse 42 in den Wirbelschichttrockner 43 gepreßt. Am Ausgang des Trockners 43 tritt nahezu gesättigter Dampf 44 aus. Der Staub aus dem Sattdampf 44 wird in einem Entstaubungszyklon 47 abgeschieden. Ein Teil 45 des entstaubten Sattdampfes wird in einem Kondensator 35 völlig niedergeschlagen und als Kondensat 36 abgeführt. Der restliche Teil 40 des Sattdampfes 44 wird über ein Gebläse 19 dem Heizregister 22 zugeführt, welches den Sattdampf auf die für den Frischdampf erforderliche Temparatur überhitzt. Der überhitzte Frischdampf wird anschließend dem Gehäuse 11 zugeführt. Die von dem Dampf am Ausgang des Gehäuses 11 mitgeführten, vorgetrockneten Dickstoffpartikeln werden im Abscheider 16 über die Zellenradschleuse 18 ausgetragen und als vorgetrocknetes Krümel-Feststoffhaufwerk 17 mit einem Wasseranteil von beispielsweise etwa 35 Gewichts-% dem Wirbelschichttrockner 43 stetig zudosiert. Der getrocknete Feststoff 28 verläßt den Wirbelschichttrockner 43 nach längerer Verweilzeit durch einen Feststoff-Überlauf 46.

Die Kombination einer erfindungsgemäßen Entwässerungsvorrichtung mit einem nachgeschalteten Wirbelschichttrockner kann auch im Inertgas-Kreislauf oder im offenen Frischluft-Umluft-Kreislauf betrieben werden.

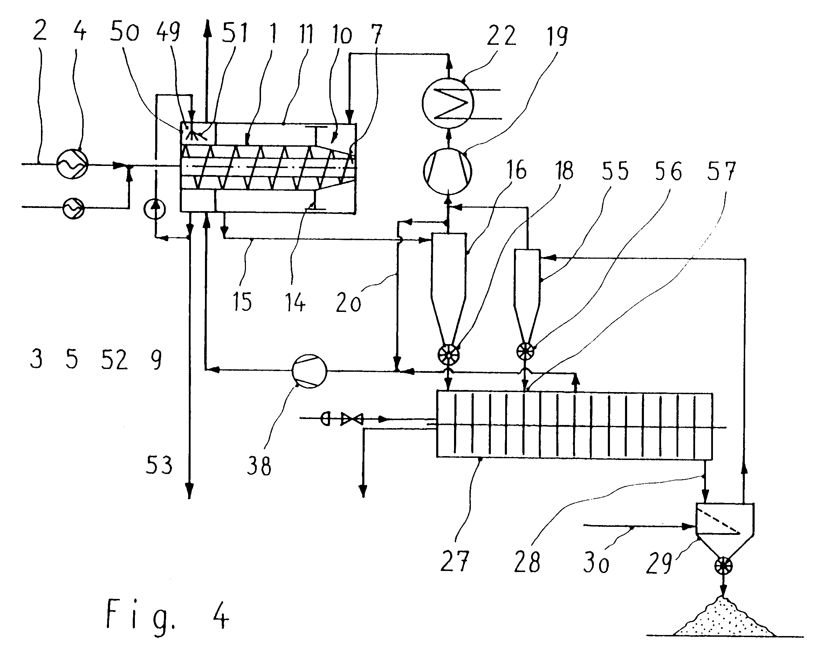

In Fig. 4 ist ein Anlagenschema mit einem Ausführungsbeispiel einer Anlage mit einer erfindungsgemäßen Entwässerungsvorrichtung gezeigt, welche den dispergierten Dickstoff 10 vor einem Kontakt-Scheibentrockner 27 im offenen Umluftbetrieb vortrocknet. Gegenüber Fig. 2 besteht die Besonderheit dieses Beispiels darin, daß die Abluft 20 aus dem Feststoffabscheider 16 und dem Kontakt-Scheibentrockner 27 durch eine Brüdenwäsche 49 von Reststaub und Geruchsstoffen befreit wird. Wie sich aus dem anhand von Fig. 1 erläuterten Bauprinzip einer Vollmantel-Schneckenzentrifuge ergibt, wird das abgetrennte Zentrat 9 von der Zentrifuge 1 aufgrund der sehr hohen Umfangsgeschwindigkeit der Trommel 1 an der Eintrittsseite in Form eines Flüssigkeits-Nebelschleiers abgesprüht, der sich in einem geeigneten Flüssigkeitsgehäuse 50 sehr vorteilhaft als Gaswäscher für die Abluft nutzen läßt. Obwohl die Mengen des abgesprühten Zentrats 9 sehr groß sind, können zur Intensivierung des Sprühnebels 51 und zur Steigerung der Reinigungsleistung die abgesprühten Zentratmengen durch eine Umwälzpumpe 52 oder durch Zusatz von Brauchwasser vergrößert werden. Das aus der zentrifugalen Flüssigkeitsabtrennung resultierende, relativ feststoffreie Zentrat 9 wird durch die Abluftreinigung nur geringfügig mit ausgewaschenen Staub- und Geruchsstoffen befrachtet und fließt als verunreinigte Flüssigkeit 53 beispielsweise in die nicht dargestellte Kläranlage zurück. Ähnlich wie im Falle von Fig. 1 wird das mit Dickstoffpartikeln beladene Trocknungsgas 15 im Feststoffabscheider 16 entstaubt, als feuchtes Gas im Umluftgebläse 19 komprimiert, im Heizregister 22 aufgeheizt und als heißes Trocknungsgas wieder in das Gehäuse 11 eingeblasen. Das von der Zellenradschleuse 18 ausgetragene Feststoffhaufwerk wird wie in Fig. 2 einem Langzeit-Kontakttrockner 27 zudosiert und verläßt den Trockner 27 als Granulat-Staub-Gemisch 28. Der in dem anschließenden Luftstrahlsieb 29 von der Frischluft 30 mitgerissene, trockene Feinststaub des Gemisches 28 wird im Zyklon 55 abgeschieden und dem Trockner 27 an geeigneter Stelle 57 über die Zellenradschleuse 56 kontinuierlich rückgemischt. Die trockene Abluft des Zyklon 55 wird der Abluft des Abscheiders 16 zugemischt. Ein Teil 20 der Abluft des Abscheiders 16 wird den aus dem Trockner 27 abgesaugten Brüden zugemischt. Die auf diese Weise mit Luft angereicherten Brüden werden über ein Gebläse 38 in das Flüssigkeitsgehäuse 50 eingeblasen, wo sie ebenso wie die Abluft 20 des Abscheiders 16 von Geruchsstoffen befreit werden. Die übrigen Anlagenteile haben die gleichen Bezugszeichen und Funktionen wie in Fig. 1 und Fig. 2 beschrieben. Anstelle eines Scheibentrockners kann als Trockner 27 auch jeder andere geeignete Kontakttrockner der Entwässerungsvorrichtung 1, 11 nachgeschaltet werden.

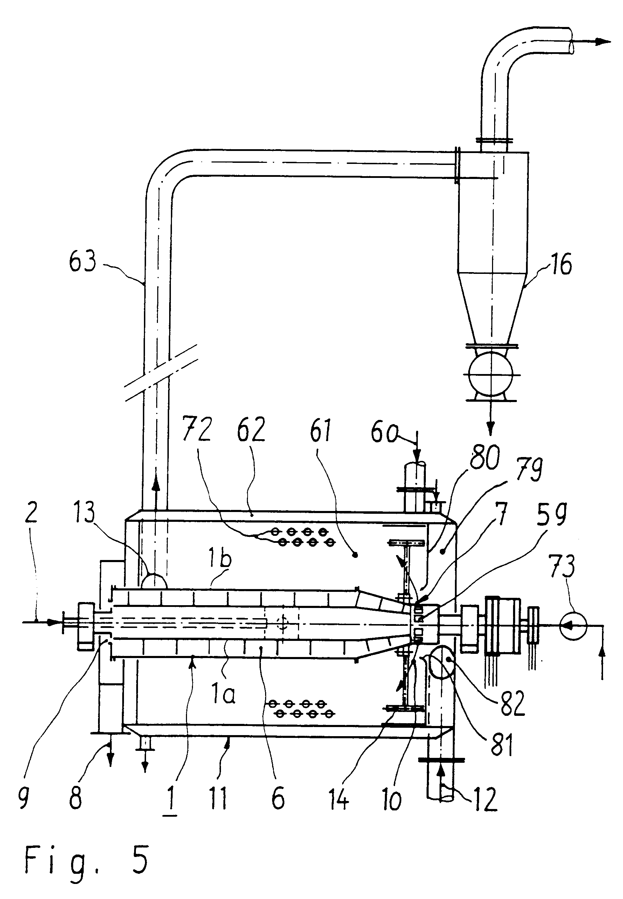

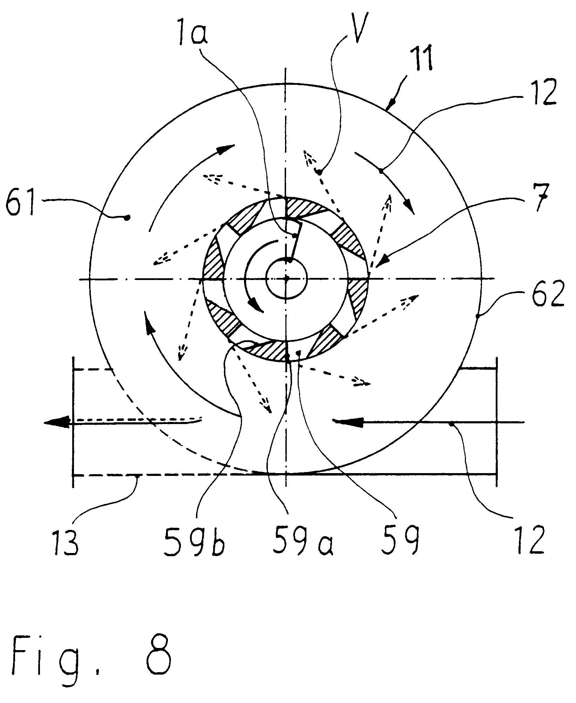

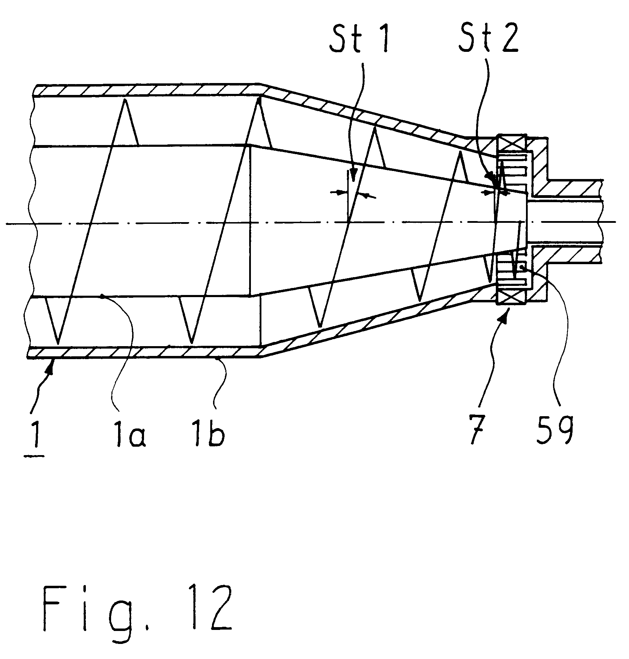

Fig. 5 zeigt eine erfindungsgemäße Entwässerungsvorrichtung im schematischen Längsschnitt. Die Teile 1 bis 14 sind in ihrer Funktion den mit jeweils den gleichen Bezugszeichen versehenen Teilen in Fig. 1 ähnlich. Die Abwurfzone 7 der Zentrifugentrommel 1b am axialen, austragseitigen Ende der Transportschnecke 1a hat sehr viele Abwurföffnungen 59, d. h., eine große Abwurflänge, um die dispergierten Dickstoffpartikeln im Durchmesser möglichst klein zu halten. Die letzte Wendel der Transportschnecke 1a kann dabei, wie in Fig. 12 im Detail veranschaulicht ist, mit einer gegenüber der sonstigen Steigung St1 verringerten Steigung St2 versehen werden, um die Abwurflänge nahezu auf den gesamten Umfang der rotierenden Zentrifugentrommel 1b zu erstrecken. Im Sinne einer möglichst hohen Umfangsgeschwindigkeit der Auswurfmengen 59 wird der Durchmesser der Abwurfzone 7 und deren Drehzahl möglichst groß gewählt. Des weiteren kann, wie in Fig. 8 näher gezeigt ist, die im Windschatten der Abwurfkante 59a jeder Abwurföffnung 59 liegende, nicht-beschleunigende Kante 59b eine Neigung bezüglich des gestrichelt angedeuteten Zentrifugalkraftvektors V aufweisen, um einen Rückstau von auszuwerfendem Dickstoff an der Kante 59b zu vermeiden. Die Anströmung der in Richtung des Zentrifugalkraftvektors V ausgeworfenen Dickstoffpartikeln durch das im wesentlichen gegensinnig im Trocknungsraum 61 strömende Trocknungsgas 12 ist aus Fig. 8 gut erkennbar. Zur Vermeidung einer Überhitzung der in unmittelbarer Nähe der mechanisch und thermisch hoch belasteten Abwurfzone 7 angebrachten Gleitlager sowohl der Transportschnecke 1a als auch der Zentrifugentrommel 1b kann, wie in Fig. 5 angedeutet ist, eine Kühlung mittels einer Kühlmittelpumpe 73 vorgesehen werden, welche Kühlmittel axial an die rotierenden Teile der Vorrichtung 1 heranführt.

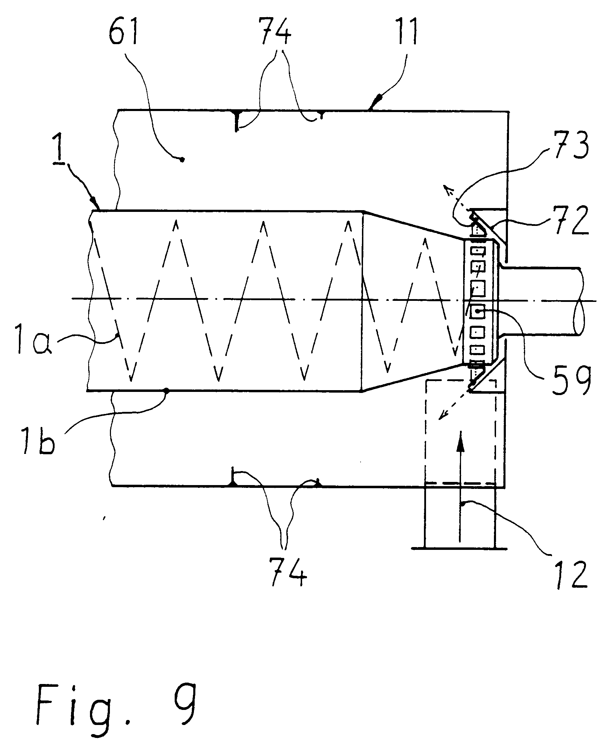

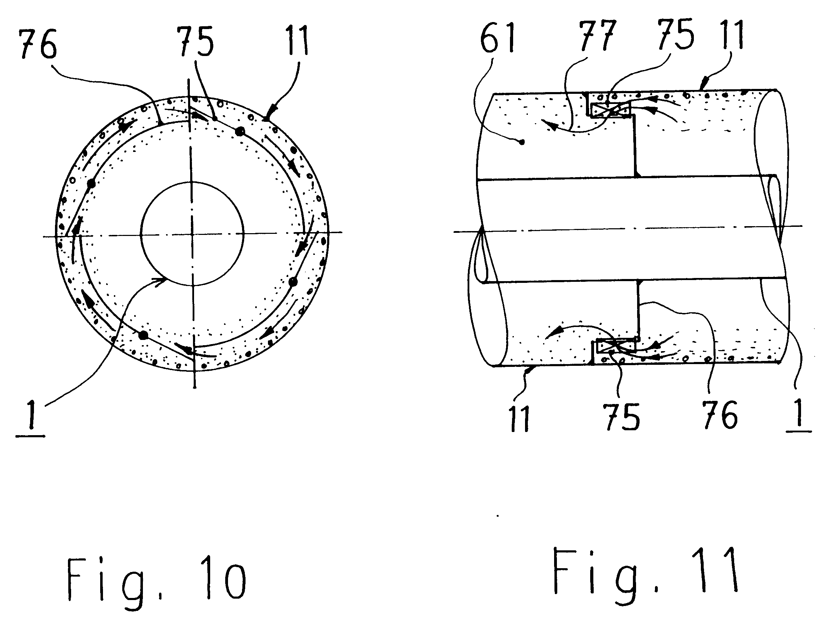

Der sich radial ausbreitende Schirm aus dispergiertem, partikelförmigem Dickstoff 10 wird, wie in Fig. 5 angedeutet ist, von dem mit hoher Geschwindigkeit in unmittelbarer Nähe der Abwurföffnungen 59 in das Gehäuse 11 tangential strömenden, heißen Trocknungsgas 12 aus der radialen Bahnebene in Achsrichtung des Gehäuses 11 umgelenkt und durchkreuzt die auf der Zentrifugen-Trommel 1b befestigten, mit der Trommel 1b rasch rotierenden Mahlorgane 14. Die Mahlorgane 14 sind ebenso wie nicht dargestellte Transport- und Schlägerflügel (die in gleicher Weise wie die Mahlorgane 14 ausgebildet und am Außenumfang der rotierenden Zentrifugentrommel angebracht sind) in der Lage, Dickstoff-Agglomerate zu zerstören und auf diese Weise den Wasserentzug in dem Gehäuse 11 zu beschleunigen. Da bei größeren Partikeldurchmessern das Trocknungsgas 12 nicht oder nur unzureichend in der Lage ist, eine wesentliche Umlenkung der mit hoher Geschwindigkeit abgeschleuderten Dickstoffpartikeln zu erzielen, können zur stärkeren Umlenkung des partikelförmigen Dickstoffs 10 in die Achsrichtung gemäß Fig. 9 auch kegel- oder schüsselförmige Umlenkbleche 72 insbesondere in unmittelbarer Nähe der Dickstoff-Abwurfzone 7 in das Innere des Gehäuses 11 eingebaut sein, auf welche die Dickstoffpartikeln 10 unter flachem Winkel auftreffen und abprallen. Um Anlagerungen an diesen Umlenkblechen 72 sowie an kritischen Stellen der Innenwand des Gehäuses 11 zu verhindern, können an der rotierenden Zentrifugentrommel befestigte, rotierende Wandkratzer oder auch Vibratoren und dergleichen vorgesehen sein, die stellvertretende für alle derartige Möglichkeiten in Fig. 9 durch einen rotierenden Kratzer 73 angedeutet sind, welcher auf der Zentrifugentrommel zwischen den Abwurföffnungen 59 befestigt ist und in engem Abstand an dem als konischem Ring ausgebildeten Umlenkblech 72 vorbeistreicht. Zur Richtungsführung der dispergierten Dickstoffpartikeln können am Gehäuse 11 in Achsrichtung verteilte, nicht dargestellte Einlaßöffnungen für ein Sekundär-Heißgas vorgesehen sein. Abrasiv beanspruchte Teile des Gehäuses 11 können mit Verschleißschutz-Materialen ausgekleidet sein. In der Nähe des Schirmes von zerstäubten Dickstoffpartikeln 10 kann Feinststaub 60 zum Granulieren der dispergierten Dickstoffpartikel 10 eingeblasen werden. Um die Wasserverdampfungsleistung des Innenraumes 61 des Gehäuses 11 weiter zu steigern, können dessen Gehäusewände 62 beheizt werden. Zusätzlich können im Innenraum 61 Heizflächen 72 (Fig. 5) eingebaut werden. Durch eingebaute, radiale Stauringe 74 mit gegebenenfalls unterschiedlicher radialer Länge an der Innenwand des Gehäuses 11 (Fig. 9) kann eine längere Aufenthaltsdauer insbesondere für die größten Partikelagglomerate im Innenraum 61 des Gehäuses 11 erzwungen werden. Ferner läßt sich durch steuerbare Weichen mit beweglichen, axialen Klappen 75 und feststehenden, radialen Stauelementen 76 (Fign. 10 und 11) eine Größensortierung von Partikeln im Innenraum des Gehäuses 11 erzielen. Diese Klassierwirkung ist in Fig. 11 durch entsprechende Pfeile 77 für die Strömung der Dickstoffpartikeln angedeutet.

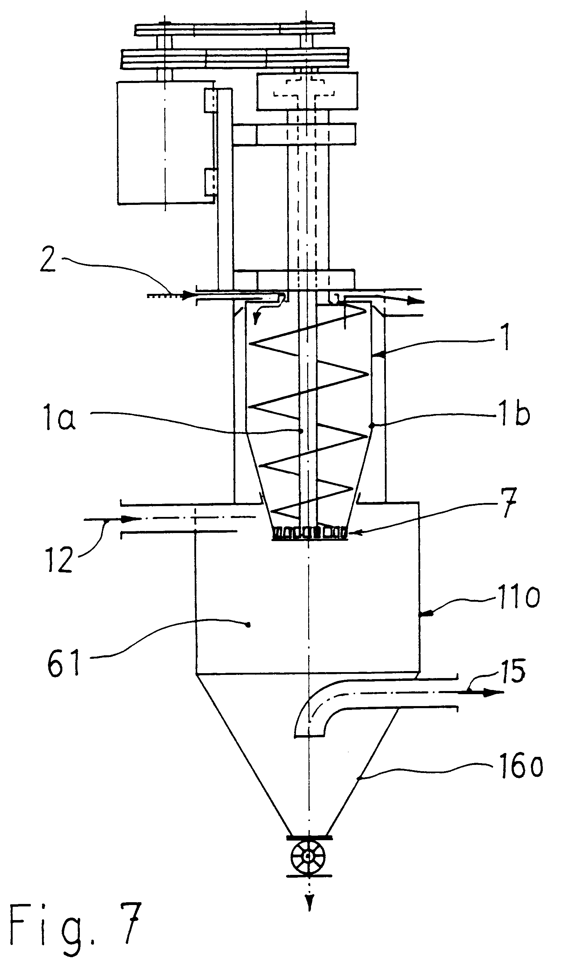

Die vorgetrockneten Dickstoffartikel verlassen bei 13 den Innenraum 61 und gelangen über einen Fördergastrockner 63, beispielsweise einen Stromtrockner oder dergleichen, zum Abscheidezyklon 16. Im Falle einer in Fig. 7 dargestellten Entwässerungsvorrichtung mit vertikaler Achslage bei fliegender Lagerung der Vollmantel-Zentrifuge 1 ist in das Zerstäubungstrockner-Gehäuse 110, welches sich in axialer Verlängerung der Zentrifuge 1 erstreckt, ein Zyklon 160 integriert, der als axiale Fortsetzung des Gehäuses 110 ausgebildet ist. Gegenüber den mit horiziontaler Achslage angeordneten Zentrifuge 1 mit Lagerung an beiden axialen Enden gemäß den Ausführungsbeispielen nach Fign. 1 bis 5 eignet sich die Ausführungsform nach Fig. 7 insbesondere für kleinere Anlagen. Die Dickstoff-Abwurfzone 7 der Zentrifuge 1 nach Fig. 7 ragt dabei, wie aus der Zeichnung ersichtlich ist, in den Innenraum 61 des Zerstäubungstrockners hinein.

Fig. 6 zeigt einen Querschnitt und Fig. 6a einen Längs-Teilschnitt durch die Dickstoff-Abwurfzone einer Entwässerungsvorrichtung, die sich experimentell als ungeeignet zum Trocknen von zentrifuguertem Klärschlamm herausgestellt hat. Die dargestellte Vorrichtung ist mit einem als Rennbahn 64 ausgebildeten ruhenden Gehäuse und mehreren, auf der rotierenden Zentrifugen-Trommel 70 befestigten und daher ebenfalls rotierenden Räumfingern 65 ausgerüstet. Die Räumfinger 65 streichen mit einer geringen Spaltweite an der Rennbahn 64 vorbei. Aus den Abwurföffnungen 66 werden von der Transport-Schnecke 67 ständig Dickstoffpartikel abgeschleudert, welche von dem mit hoher Geschwindigkeit tangential zugeführten, heißen Trocknungsgas 68 und den rotierenden Räumfingern 65 erfaßt werden. Dadurch beschreiben die Dickstoffpartikel in dem ringförmigen Kanal 64a der Rennbahn 64 die strichpunktiert eingezeichnete Flugbahn 71, deren Länge jedoch im Vergleich zu der spiralförmigen Flugbahn bei der Ausführungsform nach Fig. 5 wesentlich geringer ist, so daß die Einwirkungsdauer des Trocknungsgases 68 auf die noch stark klebrigen Klärschlamm-Dickstoffpartikeln zu kurz ist. Die an der Wand der Rennbahn 64 anhaftenden Dickstoffpartikel können schon nach kurzer Zeit von den Räumfingern 65 nicht mehr abgelöst werden, so daß sich der Kanal 64a vollständig mit feuchten, klebrigen Dickstoffpartikeln zusetzt. Nur bei Verwendung von grobkörnigen Dickstoffpartikel, wie sie bei Klärschlamm typischerweise nicht vorkommen, erfolgt eine Trocknung in dem Kanal 64a, so daß derartige, von der Erfindung nicht betrachtete Dickstoffpartikeln zusammen mit dem zugeführten Trocknungsgas 68 aus der Rennbahn 64 als feststoffbeladener Gasstrom 69 in tangentialer Richtung ausgetragen werden.

Im Rahmen der beschriebenen Erfindung ist es auch möglich, anstelle einer Vollmantel-Schneckenzentrifuge andere Vollmantel-Zentrifugen, wie beispielsweise eine Vollmantel-Siebzentrifuge oder eine Vollmantel-Düsenzentrifuge, für die Vorentwässerung von Klärschlamm zu einem Dickstoff sowie für die Zerstäubung der Dickstoffpartikel am Zentrifugenabwurf zu verwenden.

Zusammengefaßt ergeben sich folgende wesentliche Vorteile der erfindungsgemäßen Klärschlamm-Entwässerungsvorrichtung:
- Niedrige Investionskosten;
- einfacher Aufbau;
- kleines Betriebsgebäude;
- wenig Peripheriegeräte;
- hohe Wasserverdampfungsleistung pro Volumeneinheit Frischschlamm;
- niedige Kosten pro Gewichtseinheit zu verdampfendes Wasser;
- schnelles Anfahren und Abstellen der Vorrichtung;
- keine großen Speichervorrichtungen für das Endprodukt wegen seines geringen Wasseranteils erforderlich;
- keine Rückmischung des Endprodukts mit Trockensubstanzen erforderlich;
- flexibler Betrieb möglich;
- geringer Personalaufwand;
- ideale Schüttgut-Struktur des krümelförmigen Endproduktes, daher günstige Weiterverarbeitung;
- spezifische Oberfläche des Endproduktes ist groß;
- Endprodukt kommt gekühlt mit 40 bis 50 °C aus der Vorrichtung;
- geringe Staubentwicklung wegen der Absorptionseigenschaften des krümelförmigen Endproduktes;
- wenig Geruchsbelästigung wegen kostengünstiger Brüdenwaschmöglichkeit und niedriger Endprodukttemperatur;
- heiße Verbrennungsgase sind vollständig verwertbar, daher Vermeidung von kostspieligem Besprühen der Verbrennungsgase mit Wasser;
- vorhandene Klärschlammzentrifugen sind problemlos nachrüstbar.

## Patentansprüche

1. Verfahren zum Entwässern von Schlämmen, bei dem der Schlamm mittels einer Vollmantel-Zentrifuge zu einem Dickstoff mit einem Restwasseranteil im Bereich von etwa 60 Gew.-% bis etwa 85 Gew.-% vorentwässert und anschließend dem Dickstoff mittels eines Trocknungsgases der Restwasseranteil soweit entzogen wird, daß er in einen nichtklebrigen, rieselfähigen Feststoff überführt wird, wobei die mit hoher Geschwindigkeit am Austrag der Vollmantel-Zentrifuge in dispergierter Form als Partikelschleier abgeschleuderten Dickstoffpartikeln auf ihrer Flugbahn mit dem Trocknungsgas umspült und dabei vorgetrocknet werden, **dadurch gekennzeichnet**, daß zum Entwässern von Schlämmen aus Kläranlagen die abgeschleuderten Dickstoffpartikeln auf ihrer Flugbahn in Achsrichtung der Vollmantel-Zentrifuge abgelenkt werden, derart, daß ihre Flugbahn und damit die Einwirkungsdauer des Trocknungsgases verlängert werden.

2. Verfahren nach Anspruch 1, **dadurch gekennzeichnet**, daß als Trocknungsgas Heißluft oder Verbrennungsabgase mit einer Anfangstemperatur im Bereich von etwa 150° C bis etwa 500° C verwendet wird.

3. Verfahren nach Anspruch 1 oder 2, **dadurch gekennzeichnet**, daß die Strömungsgeschwindigkeit des Trocknungsgases im Bereich von etwa 10 m/s bis etwa 50 m/s liegt.

4. Verfahren nach Anspruch 1 oder 3, **dadurch gekennzeichnet**, daß als Trocknungsgas überhitzter Wasserdampf verwendet wird.

5. Verfahren nach einem der Ansprüche 1 bis 4, **dadurch gekennzeichnet**, daß der Klärschlamm mittels der Vollmantel-Zentrifuge auf einen Trockensubstanzanteil bis zu etwa 35 Gew.-% bzw. einen Restwasseranteil bis zu etwa 65 Gew.-% vorentwässert wird und daß dem daraus resultierenden Dickstoff der Restwasseranteil bis zu etwa 35 Gew.-% entsprechend einem Trockensubstanzanteil von etwa 85 Gew.-% mittels des Trocknungsgases entzogen wird.

6. Verfahren nach einem der Ansprüche 1 bis 5, **dadurch gekennzeichnet**, daß die Größe der abgeschleuderten Dickstoffpartikel und der davon beeinflußte Restwasseranteil über die Drehzahl der Vollmantel-Zentrifuge gesteuert wird.

7. Verfahren nach einem der Ansprücke 1 bis 6, **dadurch gekennzeichnet**, daß das Trocknungsgas die abgeschleuderten Dickstoffpartikel entgegen deren Hauptflugrichtung anströmt.

8. Verfahren nach einem der Ansprüche 1 bis 6, **dadurch gekennzeichnet,** daß das Trocknungsgas die abgeschleuderten Dickstoffpartikel in deren Hauptflugrichtung ausströmt.

9. Verfahren nach einem der Ansprüche 1 bis 6, **dadurch gekennzeichnet**, daß das Trocknungsgas die abgeschleuderten Dickstoffpartikel quer zu deren Hauptflugrichtung anströmt.

10. Verfahren nach einem der Ansprüche 1 bis 9, **dadurch gekennzeichnet**, daß das Trocknungsgas in einen Kreislauf geführt und nach erfolgter Umspülung der abgeschleuderten Dickstoffpartikel gereinigt, entfeuchtet, gegebenenfalls mit Frischgas versetzt und aufgeheizt wird.

11. Verfahren nach einem der Ansprüche 1 bis 10, **dadurch gekennzeichnet,** daß das Trocknungsgas bei der Umspülung der abgeschleuderten Dickstoffpartikel zwischenzeitlich aufgeheizt wird.

12. Verfahren nach Anspruch 10 oder 11, **dadurch gekennzeichnet**, daß das mit vorgetrockneten Dickstoffpartikeln beladene Trocknungsgas mit dem abgeschleuderten Zentrifugen-Zentrat und ggf. mit zusätzlich zugeführtem Brauchwasser gewaschen wird.

13. Verfahren nach einem der Ansprüche 1 bis 12, **dadurch gekennzeichnet**, daß die vorgetrockneten Dickstoffpartikel durch das Trocknungsgas in einem pneumatischen Fördersystem abtransportiert und zu einem Abscheider und/oder zu einem oder mehreren nachgeschalteten Kurz- oder Langzeit-Trocknern gebracht werden.

14. Verfahren nach einem der Ansprüche 1 bis 13, **dadurch gekennzeichnet**, daß die dispergierten Dickstoffpartikel bei ihrer Umspülung mit Trocknungsgas einem dynamischen Größen-Sortiervorgang unterworfen werden und daß größere Dickstoffpartikel dem Trocknungsgas länger ausgesetzt werden als kleinere Dickstoffpartikel.

15. Verfahren nach einem der Ansprüche 1 bis 14, **dadurch gekennzeichnet**, daß die abgeschleuderten Dickstoffpartikel mit Trockenstaub bestäubt und granuliert werden.

16. Entwässerungsvorrichtung, insbesondere zur Durchführung des Verfahrens nach einem der Ansprüche 1 bis 15, mit einer Vollmantel-Zentrifuge (1) zum Trennen eines schlammförmigen Feststoff-Flüssigkeits-Gemisches, die einen Einlaß für die Zuführung des schlammförmigen Feststoff-Flüssigkeitsgemisches sowie an den Austrittsenden mindestens jeweils einen Auslaß für die abgetrennte Flüssigkeit und die abgetrennten Dickstoffpartikel aufweist, wobei die Dickstoffabwurfzone (7) der Zentrifuge (1) das Dispersionsorgan eines Zerstäubungstrockners bildet, und mit Mitteln zum Ablenken der abgeschleuderten Dickstoffpartikel, **dadurch gekennzeichnet**, daß zum Entwässern von Schlämmen aus Kläranlagen das Gehäuse (11) des Zerstäubungstrockners eine oder mehrere Ablenkflächen (72, 73) aufweist, die so angeordnet sind, daß die dispergierten Dickstoffe unter einem sehr flachen Auftreffwinkel auf die Ablenkflächen (72, 73) auftreffen und von diesen unter Verlängerung ihrer Flugbahn in Achsrichtung der Vollmantel-Zentrifuge (1) und damit unter Verlängerung der Einwirkungsdauer des Trocknungsgases abgelenkt werden.

17. Entwässerungsvorrichtung nach Anspruch 16, **dadurch gekennzeichnet**, daß zusätzlich die Wände der Zentrifuge (1) und/oder des die Zentrifuge (1) umgebenden bzw. axial verlängernden Gehäuses (11) zumindest an denjenigen Stellen beheizbar sind, wo der rieselfähige Feststoff aufprallt.

18. Entwässerungsvorrichtung nach Anspruch 16 oder 17, **dadurch gekennzeichnet**, daß als Vollmantel-Zentrifuge (1) eine Vollmantel-Schneckenzentrifuge vorgesehen ist.

19. Entwässerungsvorrichtung nach Anspruch 16 oder 17, **dadurch gekennzeichnet**, daß als Vollmantel-Zentrifuge (1) eine Vollmantel-Düsenzentrifuge mit etwa gleichmäßigem, kontinuierlichem Dickstoffaustrag vorgesehen ist.

20. Entwässerungsvorrichtung nach Anspruch 16 oder 17, **dadurch gekennzeichnet**, daß als Vollmantel-Zentrifuge (1) eine Vollmantel-Siebzentrifuge mit etwa gleichmäßigem, kontinuierlichem Dickstoffaustrag vorgesehen ist.

21. Entwässerungsvorrichtung nach einem der Ansprüche 16 bis 20, **dadurch** **gekennzeichnet**, daß der Zerstäubungstrockner zumindest teilweise ein gemeinsames Gehäuse (11; 110; 64) mit der Vollmantel-Zentrifuge (1) aufweist.

22. Entwässerungsvorrichtung nach einem der Ansprüche 16 bis 21, **dadurch** **gekennzeichnet**, daß das Gehäuse (11) des Zerstäubungstrockners mindestens einen zusätzlichen Einlaß für Sekundär-Heißgas und/oder einen zusätzlichen Einlaß für Trockengut-Feinanteil (60) zum Granulieren besitzt (Fig. 5).

23. Entwässerungsvorrichtung nach einem der Ansprüche 16 bis 22, **dadurch** **gekennzeichnet**, daß die Gehäusewand (62) des Zerstäubungstrockners beheizt ist und/oder in den Trocknungsraum beheizte Wände und Oberflächen eingebaut sind.

24. Entwässerungsvorrichtung nach einem der Ansprüche 16 bis 23, **dadurch** **gekennzeichnet**, daß die feststoffberührten Oberflächen im Trocknungsraum (61) des Zerstäubungstrockners zumindest teilweise einen Verschleißschutz und/oder eine antiadhesive Beschichtung aufweisen.

25. Entwässerungsvorrichtung nach einem der Ansprüche 16 bis 24, **dadurch** **gekennzeichnet**, daß die Dickstoff-Verweilzeit im Trocknungsraum (61) des Zerstäubungstrockners durch Stauringe (74) gesteuert wird (Fig. 9).

26. Entwässerungsvorrichtung nach einem der Ansprüche 16 bis 25, **dadurch** **gekennzeichnet**, daß im Trocknungsraum (61) des Zerstäubungstrockners in Nähe der Dickstoffabwurfzone (7) eine Zerkleinerungsvorrichtung (14) eingebaut ist.

27. Entwässerungsvorrichtung nach einem der Ansprüche 16 bis 26, **dadurch** **gekennzeichnet**, daß im Trocknungsraum (61) des Zerstäubungstrockners eine oder mehrere Weichen (75, 76) zur Klassierung der vorgetrockneten Dickstoff-Partikeln angeordnet sind (Fign. 10 und 11).

28. Entwässerungsvorrichtung nach einem der Ansprüche 16 bis 27, **dadurch** **gekennzeichnet**, daß im Gehäuse (11) des Zerstäubungstrockners Kratzer (73), Vibratoren oder dergleichen zum Ablösen von angebackenem Dickstoff von den Gehäusewänden (62) beziehungsweise von den Feststoff-Umlenkblechen (72) vorgesehen sind.

29. Entwässerungsvorrichtung nach einem der Ansprüche 16 bis 28, **dadurch** **gekennzeichnet**, daß in der Abwurfzone (7) der Vollmantel-Zentrifuge (1) eine Vielzahl von Abwurfkanten (59a) und/oder Prallelementen angebracht sind.

30. Entwässerungsvorrichtung nach Anspruch 29, **dadurch gekennzeichnet**, daß die im Windschatten einer Abwurfkante (59a) liegende, nicht beschleunigende Kante (59b) der betreffenden Abwurföffnung (59) eine Neigung bezüglich des Zentrifugalkraftvektors (V) aufweist (Fig. 8).

31. Entwässerungsvorrichtung nach einem der Ansprüche 16 bis 29, **dadurch** **gekennzeichnet,** daß der letzte Wendel der Transportschnecke (1a) vor der Dickstoffabwurfkante (59a) eine verringerte Steigung (St2) besitzt, derart, daß die Abwurflänge nahezu auf den ganzen Umfang der Zentrifugentrommel (1b) erstreckt wird (Fig. 12).

32. Entwässerungsvorrichtung nach Anspruch 26, **dadurch gekennzeichnet**, daß als Zerkleinerungsvorrichtung (14) auf der Außenseite der Schleudertrommel (1b) Schlägerflügel angebracht sind (Fig. 5).

33. Entwässerungsvorrichtung nach einem der Ansprüche 16 bis 32, **dadurch** **gekennzeichnet**, daß die Vollmantel-Zentrifuge (1) eine horizontale, geneigte oder vertikale Achslage aufweist.

34. Entwässerungsvorrichtung nach einem der Ansprüche 16 bis 33, **dadurch** **gekennzeichnet**, daß die Vollmantel-Zentrifuge (1) mit zylindrischer, konischer oder zylindrisch-konischer Vollmantel-, Vollmantel-Sieb-, oder Düsen-Trommel ausgerüstet ist.

35. Entwässerungsvorrichtung nach einem der Ansprüche 16 bis 34, **dadurch** **gekennzeichnet**, daß in den Zerstäubungstrockner ein Wärmetauscher (72) integriert ist (Fig. 5).

36. Entwässerungsvorrichtung nach einem der Ansprüche 16 bis 35, **dadurch gekennzeichnet**, daß in den Zerstäubungstrockner ein Abscheidezyklon (160) integriert ist (Fig. 7).

37. Entwässerungsvorrichtung nach einem der Ansprüche 16 bis 36, **dadurch** **gekennzeichnet**, daß im Bereich der Abwurfzone (7) der Vollmantel-Zentrifuge eine Kühlung (73) der rotierenden Teile vorgesehen ist.

38. Entwässerungsvorrichtung nach einem der Ansprüche 16 bis 37, **dadurch** **gekennzeichnet**, daß in den Zerstäubungstrockner ein tangentialer Gaseintritt und/oder Gasaustritt vorgesehen ist.

39. Entwässerungsvorrichtung nach einem der Ansprüche 16 bis 38, **dadurch** **gekennzeichnet**, daß das Trocknergehäuse (11) mittels einer Schottwand (80) in einen Einströmraum (79) und den Trocknungsraum (61) unterteilt ist und daß die Schottwand (80) eine kreisförmige Öffnung (81) aufweist, welche etwa in der Radialebene der Abwurföffnungen (59) liegt und letztere unter Ausbildung eines schmalen Ringspaltes umgibt, wobei das heiße Trocknungsgas (12) an einer Stelle in der Nähe des Ringspaltes tangential bezüglich der Zentrifugentrommel (1b) eingeleitet wird, welches in schraubenförmiger Bewegung in Axialrichtung des Trocknergehäuses (11) durch den Ringspalt in den Trocknungsraum (61) strömt.

40. Entwässerungsvorrichtung nach einem der Ansprüche 16 bis 39, **dadurch** **gekennzeichnet,** daß die Vollmantel-Zentrifuge (1) fliegend gelagert ist und mit der Dickstoff-Abwurfzone (7) in den Innenraum (61) des Zerstäubungstrockners hineinragt (Fig. 7).

41. Entwässerungsvorrichtung nach einem der Ansprüche 16 bis 40, **dadurch** **gekennzeichnet**, daß der Durchmesser der Abwurfzone (7) der Vollmantel-Zentrifuge (1) und deren Drehzahl möglichst groß im Sinne einer möglichst hohen Dispersion der Dickstoffpartikeln gewählt sind.

42. Verwendung der Entwässerungsvorrichtung nach einem der Ansprüche 16 bis 41 für einen nachgeordneten Konvektionstrockner zum Nachentwässern der abgeschleuderten Dickstoffpartikeln.

43. Anlage zum Trocknen von Schlämmen, insbesondere aus Kläranlagen, mit einer Entwässerungsvorrichtung und einer oder mehreren nachgeordneten Kurz- und/oder Langzeittrocknern, **dadurch** **gekennzeichnet**, daß als Entwässerungsvorrichtung eine Vorrichtung nach einem der Ansprüche 16 bis 41 vorgesehen ist.

## Claims

1. Method for the draining of sludge in which the sludge is predrained by means of a solid casing centrifuge to a thick material with a residual water portion in the region of about 60 weight % to about 85 weight % and then the residual water portion is so far extracted from the thick material by means of a drying gas that it is converted into a non sticky sprayable solid material whereby the thick material particles thrown off at high speed at the outlet of the solid casing centrifuge in dispersed form as a particle film on their trajectory are washed around with the drying gas and thereby predried, characterised in that for the draining of sludges from purificiation plants the thrown off thick material particles are guided on their trajectory in axial direction of the solid casing centrifuge such that their trajectory and thereby the duration of action of the drying gas are lengthened.

2. Method according to claim 1, characterised in that as drying gas, hot air or combustion exhaust gas at an initial temperature on the range of about 150°C to about 500°C is used.

3. Method according to claim 1 or 2, characterised in that the flow velocity of the drying gas is in the region of about 10m/s to about 50m/s.

4. Method according to claim 1 or 3, characterised in that as drying gas superheated water vapour is used.

5. Method according to one of the claims 1 to 4, characterised in that the sewage sludge is predrained by means of the solid casing centrifuge to a dry substance portion up to about 35 weight % or as the case may be a residual water portion up to about 65 weight % and that from the thick material resulting therefrom the residual water portion is extracted up to about 35 weight % corresponding to a dry substance portion of about 85 weight % by means of the drying gas.

6. Method according to one of the claims 1 to 5, characterised in that the size of the thrown off thick material particles and the residual water portion influence thereby is controlled via the speed of the solid casing centrifuge.

7. Method according to one of the claims 1 to 6, characterised in that the drying gas flows towards the thrown off thick material particles against their main trajectory direction.

8. Method according to one of the claims 1 to 6, characterised in that the drying gas flows from the thrown out thick material particles in their main trajectory.

9. Method according to one of the claims 1 to 6, characterised in that the drying gas flows to the thrown out thick material particles crosswise to their main trajectory.

10. Method according to one of the claims 1 to 9, characterised in that the drying gas is led in a circuit and after flowing around the thrown off thick material particles has taken place, is cleaned, moisture removed, if necessary replaced with fresh gas and heated.

11. Method according to one of the claims 1 to 10, characterised in that the drying gas with the flowing around of the thrown off thick material particles is in the meantime heated.

12. Method according to claim 10 or 11, characterised in that the drying gas laden with preheated thick material particles is washed with the thrown off centrifuge centrate and if necessary with additionally supplied water fit for use.

13. Method according to one of the claims 1 to 12, characterised in that the predried thick material particles are transported in a pneumatic conveying system and brought to a divider and/or to one or several connected short or long time driers.

14. Method according to one of the claims 1 to 13, characterised in that the dispersed thick material particles upon their washing around with drying gas are subjected to a dynamic size sorting procedure and that larger thick material particles are exposed to the drying gas longer than the smaller thick material particles.

15. Method according to one of the claims 1 to 14, characterised in that the thrown off thick material particles are dusted with dry dust and granulated.

16. Draining apparatus in particular for the carrying out of the method according to one of the claims 1 to 15, with a solid casing centrifuge (1) for the separating of a sludge-like solid material liquid mixture having an inlet for the supply of the sludge-like solid material liquid mixture as well as at the outlet ends at least respectively an outlet for the separated liquid and the separated thick material particles whereby the thick material throw off zone (7) of the centrifuge (1) forms the dispersion member of a spraying drier and with means for the deflecting of the thrown off thick material particles, characterised in that for the draining of sludges from purification plant the housing (11) of the spraying drier has one or several deflecting faces (72, 73) which are so arranged that the dispersed thick materials meet the deflecting faces (72, 73) at a very low angle of impact and are diverted by these with lengthening of their trajectory in axial direction of the solid casing centrifuge (1) and thereby with lengthening of the duration of action of the drying gas.

17. Draining apparatus according to claim 16, characterised in that additionally the walls of the centrifuge (1) and/or of the housing (11) surrounding or axially lengthening the centrifuge (1) are heatable at those places where the sprayable solid material strikes.

18. Draining apparatus according to claim 16 or 17, characterised in that a solid casing worm centrifuge is provided as a solid casing worm centrifuge.

19. Draining apparatus according to claim 16 or 17, characterised in that a solid casing nozzle centrifuge with almost uniform continuous thick material discharge is provided as a solid casing centrifuge (1).

20. Draining apparatus according to claim 16 or 17, characterised in that a solid casing sieve centrifuge with almost uniform continuous thick material discharge is provided as a solid casing centrifuge (1).

21. Draining apparatus according to one of the claims 16 to 20, characterised in that the housing (11) of the spraying drier has at least partly a common housing (11; 110; 64) with the solid casing centrifuge (1).

22. Draining apparatus according to one of the claims 16 to 21, characterised in that the housing (11) of the spraying drier has at least one additional inlet for secondary hot gas and/or an additional inlet for the dry material fine portion (60) for the granulating (Fig. 5).

23. Draining apparatus according to one of the claims 16 to 22, characterised in that the housing wall (62) of the spraying drier is heated and/or heated walls and surfaces are built in the drying space.

24. Draining apparatus according to one of the claims 16 to 23, characterised in that the solid material contacted surfaces in the drying space (61) of the spraying drier have at least partly a wear protection and/or an anti-adhesive coating.

25. Draining apparatus according to one of the claims 16 to 24, characterised in that the thick material staging time in the drying space (61) of the spraying drier is controlled by pressure rings (74) (Fig. 9).

26. Draining apparatus according to one of the claims 16 to 25, characterised in that a reduction apparatus (14) is built in the drying space (61) of the spraying drier in the vicinity of the thick material throw off zone (7).

27. Draining apparatus according to one of the claims 16 to 26, characterised in that in the drying space (61) of the spraying drier one or several dividers (75, 76) for the grading of the predried thick material particles are arranged (Figs. 10 and 11).

28. Draining apparatus according to one of the claims 16 to 27, characterised in that in the housing (11) of the spraying driers, scrapers (73), vibrators or the like for the loosening of the caked thick material from the housing walls (62) or, as the case may be, from the solid material deflecting plates (72).

29. Draining apparatus according to one of the claims 16 to 28, characterised in that in the throw off zone (7) of the solid casing centrifuge (1) a plurality of throw off edges (59a) and/or deflecting elements are fitted.

30. Draining apparatus according to claim 20, characterised in that the non accelerating edge (59b) of the concerned throw off opening (59) lying in the lee of a throw off edge (59a) has an inclination in respect of the centrifugual force vector (V) (Fig. 8).

31. Draining apparatus according to one of the claims 16 to 29, characterised in that the last whirl of the transport worm (1a) before the thick material throw off edge (59a) has a reduced pitch (St2) such that the throw off is extended almost on the whole periphery of the centrifuge drum (1b) (Fig. 12).

32. Draining apparatus according to claim 26, characterised in that striker vanes are fitted as a reducing apparatus (14) on the outer side of the throwing drum (1b) (Fig. 5).

33. Draining apparatus according to one of the claims 16 to 32, characterised in that the solid casing centrifuge (1) has a horizontal, inclined or vertical axial portion.

34. Draining apparatus according to one of the claims 16 to 33, characterised in that the solid casing centrifuge (1) is equipped with a cylindrical, conical or cylindrically-conical solid casing drum, solid casing sieve drum or nozzle drum.

35. Draining apparatus according to one of the claims 16 to 34, characterised in that a heat exchanger (72) is integrated in the spraying diyer (Fig. 5).

36. Draining apparatus according to one of the claims 16 and 35, characterised in that a separator cyclone (160) is integrated in the spraying drier (Fig. 7).

37. Draining apparatus according to one of the claims 16 to 36, characterised in that a cooling (73) of the rotating parts is provided in the region of the throw off zone (7) of the solid casing centrifuge.

38. Draining apparatus according to one of the claims 16 to 37, characterised in that a tangential gas inlet and/or gas outlet is provided in the spraying drier.

39. Draining apparatus according to one of the claims 16 to 38, characterised in that the dryer housing (11) is divided by means of a partition wall (80) is divided into a flow space (79) and the drying space (61) and that the partition wall (80) has a circular opening (81) which lies approximately in the radial plane of the throw off openings (59) and surrounds the latter forming a narrow annular gap whereby the hot drying gas (12) is introduced at a place in the vicinity of the annular gap tangentially in respect of the centrifuge drum (1b) which flows in helical motion in axial direction of the dryer housing (11) through the annular gap into the drying space (61).

40. Draining apparatus according to one of the claims 16 to 39, characterised in that the solid casing centrifuge (1) is mounted overhung and projects with the thick material throw off zone (7) into the inner space (61) of the spraying drier (Fig. 7).

41. Draining apparatus according to one of the claims 16 to 40, characterised in that the diameter of the throw off zone (7) of the solid casing centrifuge (1) and its speed are selected as great as possible by the way of a dispersion as high as possible of the thick material particles.

42. Use of the draining apparatus according to one of the claims 16 to 41 for a connected convection drier for the redraining of the throw off thick material particles.

43. Plant for the drying of sludges in particular from purification plant with a draining apparatus and one or several connected short and/or long time driers, characterised in that an apparatus according to one of the claims 16 to 41 is provided as a draining apparatus.

## Revendications

1. Procédé de déshydratation de boues de curage, dans lequel les boues sont pré-déshydratées au moyen d'une centrifugeuse à bol plein, pour obtenir un liquide épais, ayant une teneur en eau résiduelle située dans la plage d'à peu près 60 % en poids jusqu'à à peu 85 % en poids, puis la proportion d'eau résiduelle étant extraite du liquide épais au moyen d'un gaz de séchage, pour atteindre une teneur pour laquelle il se transforme en un solide à faculté d'écoulement, non collant, les particules de liquide épais éjectées à la sortie de la centrifugeuse à bol plein, à l'état dispersée, à vitesse élevée, sous forme de constituant particulaire trouble étant rincées sur leur trajectoire de vol, à l'aide du gaz de séchage, et étant alors pré-séchées, caractérisé en ce que pour effectuer la déshydratation de boues de curage venant d'installations de clarification, les particules de liquide épais ayant été éjectées sont déviées sur leur trajectoire de vol, dans la direction axiale de la centrifugeuse à bol plein, de manière que leur trajectoire de vol et, ainsi, la durée d'action du gaz du séchage soient prolongées.

2. Procédé selon la revendication 1, caractérisé en ce que l'on utilise comme gaz de séchage de l'air chaud ou des gaz d'échappement issus de combustion, ayant une température initiale située dans la plage d'à peu près 150 °C à à peu près 500 °C.

3. Procédé selon la revendication 1 ou 2, caractérisé en ce que la vitesse d'écoulement du gaz de séchage se situe dans la plage allant d'à peu près 10 m/s à à peu près 50 m/s.

4. Procédé selon la revendication 1 ou 3, caractérisé en ce que l'on utilise comme gaz de séchage de la vapeur d'eau surchauffée.

5. Procédé selon l'une des revendications 1 à 4, caractérisé en ce que les boues de curage clarifiées sont pré-déshydratées au moyen de la centrifugeuse à bol plein, pour atteindre une proportion en substance sèche allant jusqu 'à à peu près 35 % en poids, respectivement une teneur en eau résiduelle allant jusqu'à à peu près 65 % en poids et en ce que l'on prélève la proportion d'eau résiduelle du liquide épais en résultant, au moyen du gaz de séchage, jusqu'à atteindre une teneur d'à peu près 35 % en poids, correspondant à une proportion de substance sèche d'à peu près 85 % en poids.

6. Procédé selon l'une des revendications 1 à 5, caractérisé en ce que la taille des particules de liquide épais ayant été éjectées et la teneur en eau résiduelle afférente sont commandées par la vitesse de rotation de la centrifugeuse à bol plein.

7. Procédé selon l'une des revendications 1 à 6, caractérisé en ce que l'écoulement de gaz de séchage arrive sur les particules de liquide épais en cours d'éjection, à l'encontre de leur direction principale de vol.

8. Procédé selon l'une des revendications 1 à 7, caractérisé en ce que l'écoulement de gaz de séchage quitte les particules de liquide épais en cours d'éjection, en suivant leur direction principale de vol.

9. Procédé selon l'une des revendications 1 à 7, caractérisé en ce que l'écoulement du gaz de séchage quitte les particules de liquide épais en cours d'éjection transversalement par rapport à leur direction principale de vol.

10. Procédé selon l'une des revendications 1 à 9, caractérisé en ce que le gaz de séchage est véhiculé en circuit et, une fois effectué le rinçage des particules de liquide épais ayant été éjectées, il est épuré, déshumidifié, le cas échéant mélangé à du gaz neuf et chauffé.

11. Procédé selon l'une des revendications 1 à 10, caractérisé en ce que le gaz de séchage est soumis, à des moments intermédiaires, à un chauffage lors du rinçage-balayage des particules de liquide épais éjectées.

12. Procédé selon la revendication 10 ou 11, caractérisé en ce que le gaz de séchage chargé en particules de liquide épais pré-séchées est lavé avec le concentrat éjecté de la centrifugeuse et, le cas échéant, avec de l'eau industrielle, amenée à titre supplémentaire.

13. Procédé selon l'une des revendications 1 à 12, caractérisé en ce que les particules de liquide épais pré-séchées sont évacuées en étant transportées au moyen du gaz de séchage, dans un système de transport pneumatique et menées à un séparateur et/ou à un ou à plusieurs sécheurs à temps de séjour brefs ou longs, mis en circuit en aval.

14. Procédé selon l'une des revendications 1 à 13, caractérisé en ce que les particules de liquide épais dispersées sont soumises lors de leur rinçage avec le gaz de séchage à un processus de triage dynamique de la taille et les particules de liquide épais de grande taille étant exposées au gaz de séchage plus longtemps que les particules de liquide épais de petite taille.

15. Procédé selon l'une des revendications 1 à 14, caractérisé en ce que les particules de liquide épais éjectées sont saupoudrées de poussières sèches et façonnées en granulés.

16. Dispositif de déshydratation, en particulier pour la mise en oeuvre du procédé selon l'une des revendications 1 à 15, avec une centrifugeuse à bol plein (1), pour la séparation d'un mélange solide-liquide se présentant sous forme de boue, présentant une admission pour l'amenée du mélange solide-liquide sous forme de boue et ainsi qu'à chacune des extrémités de sortie au moins une évacuation pour le liquide séparé et pour les particules de liquide épais séparées, la zone d'éjection de liquide épais (7) de la centrifugeuse (1) constituant l'organe de dispersion d'un sécheur par pulvérisation et équipé de moyens pour dévier les particules de liquide épais éjectées, caractérisé en ce que, pour effectuer la déshydratation des boues de curage venant d'installations de clarification, le carter (11) du sécheur par pulvérisation présente une ou plusieurs surfaces de déviation (72, 73) disposées de manière que les liquides épais dispersés arrivent sur les surfaces de déviation (72, 73) en suivant un angle d'impact très plat et sont déviés par ces surfaces de déviation, avec prolongement de leur trajectoire de vol dans la direction axiale de la centrifugeuse à bol plein (1) et ainsi avec prolongement de la durée d'action du gaz de séchage.

17. Dispositif de déshydratation selon la revendication 16, caractérisé en ce qu'en plus les parois de la centrifugeuse (1) et/ou du carter (11) entourant ou prolongeant axialement la centrifugeuse (1) peuvent être chauffées au moins aux endroits où viennent heurter les solides susceptibles d'écoulement.

18. Dispositif de déshydratation selon la revendication 16 ou 17, caractérisé en ce que une centrifugeuse à vis et à bol plein est prévue à titre de centrifugeuse à bol plein (1).

19. Dispositif de déshydratation selon la revendication 16 ou 17, caractérisé en ce que, concernant la centrifugeuse à bol plein (1), est prévue une centrifugeuse à bol plein et à buse, avec une évacuation de liquide épais continue, à peu près régulière.

20. Dispositif de déshydratation selon la revendication 16 ou 17, caractérisé en ce qu'à titre de centrifugeuse à bol plein (1) est prévue une centrifugeuse-tamiseuse à bol plein, avec une évacuation de liquide épais continue, à peu près régulière.

21. Dispositif de déshydratation selon l'une des revendications 16 à 20, caractérisé en ce que le sécheur par pulvérisation présente au moins partiellement un carter (11; 110; 64) commun avec la centrifugeuse à bol plein (1).

22. Dispositif de déshydratation selon l'une des revendications 16 à 21, caractérisé en ce que le carter (11) du sécheur par pulvérisation comporte au moins une admission supplémentaire pour le gaz chaud secondaire et/ou une admission supplémentaire pour les fines de produit de séchage (60), destinées à la granulation (figure 5).

23. Dispositif de déshydratation selon l'une des revendications 16 à 22, caractérisé en ce que la paroi de carter (62) du sécheur par pulvérisation est chauffée et/ou des parois et des surfaces chauffées étant intégrées dans l'enceinte de séchage.

24. Dispositif de déshydratation selon l'une des revendications 16 à 23, caractérisé en ce que les surfaces en contact avec les solides, dans l'enceinte de séchage (61) du sécheur par pulvérisation, présentent au moins partiellement une protection contre l'usure et/ou un revêtement anti-adhésif.

25. Dispositif de déshydratation selon l'une des revendications 16 à 24, caractérisé en ce que le temps de séjour du liquide épais dans l'espace de séchage (61) du sécheur par pulvérisation est commandé au moyen de bagues de retenue (74) (figure 9).

26. Dispositif de déshydratation selon l'une des revendications 16 à 25, caractérisé en ce qu'un dispositif de broyage (14) est intégré dans l'enceinte de séchage (60) du sécheur par pulvérisation, à proximité de la zone d'éjection de liquide épais (7).

27. Dispositif de déshydratation selon l'une des revendications 16 à 26, caractérisé en ce que un ou plusieurs aiguillages (75, 76), destinés au triage des particules de liquide épais pré-séchées, sont disposés dans l'enceinte de séchage (61) du sécheur par pulvérisation (figures 10 et 11).

28. Dispositif de déshydratation selon l'une des revendications 16 à 27, caractérisé en ce que, dans le carter (11) du sécheur par pulvérisation, sont prévus des racloirs (73), des vibreurs ou analogues pour désolidariser des parois de carter (62), respectivement des tôles de déviation de solides (72), le liquide épais ayant adhéré suite à la cuisson.

29. Dispositif de déshydratation selon l'une des revendications 16 à 28, caractérisé en ce qu'une pluralité d'arêtes d'éjection (59a) et/ou d'éléments d'impact sont montés dans la zone d'éjection (7) de la centrifugeuse à bol plein (1).

30. Dispositif de déshydratation selon la revendication 29, caractérisé en ce que l'arête (59b), située dans "l'ombre portée" en considérant la direction de l'écoulement, d'une arête d'éjection (59a) et ne présentant pas d'effet accélérateur, de l'ouverture d'éjection (59) concernée, présente une inclinaison par rapport au vecteur de force centrifuge (V) (figure 8).

31. Dispositif de déshydratation selon l'une des revendications 16 à 29, caractérisé en ce que la dernière spire de la vis de transport (1a) avant l'arête d'éjection de liquide épais (59a) comporte un pas (St2) diminué, de manière que la longueur d'éjection s'étende à peu près sur la totalité de la périphérie du tambour de centrifugeuse (1b) (figure 12).

32. Dispositif de déshydratation selon la revendication 26, caractérisé en ce que des ailettes de frappe sont montées, à titre de dispositif de broyage (14), en face extérieure du tambour centrifugeur (1b) (figure 5).

33. Dispositif de déshydratation selon l'une des revendications 16 à 32, caractérisé en ce que la centrifugeuse à bol plein (1) présente un axe horizontal, incliné ou vertical.

34. Dispositif de déshydratation selon l'une des revendications 16 à 33, caractérisé en ce que la centrifugeuse à bol plein (1) est équipée d'un tambour à bol plein, d'un tambour tamiseur à bol plein ou d'un tambour à buse, de forme cylindrique conique ou cylindro-conique.

35. Dispositif de déshydratation selon l'une des revendications 16 à 34, caractérisé en ce qu'un échangeur de chaleur (72) est intégré dans le sécheur par pulvérisation (figure 5).

36. Dispositif de déshydratation selon l'une des revendications 16 à 35, caractérisé en ce qu'un séparateur cyclone (160) est intégré au sécheur par pulvérisation (figure 7).

37. Dispositif de déshydratation selon l'une des revendications 16 à 36, caractérisé en ce qu'un refroidissement (33) des parties tournantes est prévu dans la région de la zone d'éjection (7) de la centrifugeuse à bol plein.

38. Dispositif de déshydratation selon l'une des revendications 16 à 37, caractérisé en ce qu'une entrée de gaz et/ou une sortie de gaz tangentielles sont prévues dans le sécheur par pulvérisation.

39. Dispositif de déshydratation selon l'une des revendications 16 à 38, caractérisé en ce que le carter de sécheur (11) est subdivisé, au moyen d'une paroi de cloisonnement (80), en une enceinte d'arrivée d'écoulement (79) et en l'enceinte de séchage (61), et en ce que la paroi de cloisonnement (80) présente une ouverture (81) circulaire, située à peu près dans le plan radial des ouvertures d'éjection (59) et entourant ces dernières en constituant un interstice annulaire étroit, le gaz de séchage (12) chaud étant introduit en un endroit situé à proximité de l'interstice annulaire, tangentiellement, par rapport au tambour de centrifugeuse (1b) et s'écoulant, en un mouvement hélicoïdal, dans la direction axiale du carter de sécheur (11), à travers l'interstice annulaire dans l'enceinte de séchage (61).

40. Dispositif de déshydratation selon l'une des revendications 16 ou 39, caractérisé en ce que la centrifugeuse à bol plein (1) est montée à rotation en porte-à-faux et pénètre, par la zone d'éjection de liquide épais (7), dans l'espace intérieur (61) du sécheur par pulvérisation (figure 7).

41. Dispositif de déshydratation selon l'une des revendications 16 à 40, caractérisé en ce que le diamètre de la zone d'éjection (7) de la centrifugeuse à bol plein (1) et sa vitesse de rotation sont aussi grands que possible dans le sens de l'obtention d'une dispersion aussi élevée que possible des particules de liquide épais.

42. Utilisation du dispositif de déshydratation selon l'une des revendications 16 à 41 pour un sécheur par convection, mis en circuit en aval, destiné à effectuer une post-déshydratation des particules de liquide épais éjectées.

43. Installation de séchage de boues de curage, en particulier venant d'installations de clarification, avec un dispositif de déshydratation et un ou plusieurs sécheurs à temps de séjour brefs et/ou longs, mis en circuit en aval, caractérisé en ce qu'un dispositif selon l'une des revendications 16 à 41 est prévu comme dispositif de déshydratation.
